# EUROPÄISCHE PATENTSCHRIFT

(11) **EP 2 107 928 B1**
(45) Veröffentlichungstag und Bekanntmachung des Hinweises auf die Patenterteilung: **12.05.2010**
(21) Anmeldenummer: 07847497.0
(22) Anmeldetag: 29.11.2007
(51) Int. Cl.: B01D 29/11, B01D 29/21

(54) **AUSWECHSELBARER FILTEREINSATZ**
EXCHANGEABLE FILTER INSERT
GARNITURE DE FILTRE REMPLAÇABLE

(30) Priorität: 04.12.2006 DE 202006018335 U
(43) Veröffentlichungstag der Anmeldung: 14.10.2009
(73) Patentinhaber: MANN+HUMMEL GmbH, 71638 Ludwigsburg (DE)
(72) Erfinder: KNICKMANN, Kai, Meole Brace, Shrewsbury SY3 9JR (GB); BLUM, Ralf, 84168 Aham (DE); CEDZICH, Wolfgang, 71686 Remseck (DE); FRANZ, Andreas, 71638 Ludwigsburg (DE); HARTMANN, Roland, 71665 Vaihingen a. d. Enz (DE); JAINEK, Herbert, 74074 Heilbronn (DE); KLEIN, Gunnar-Marcel, 42555 Velbert-Langenberg (DE); KOLCZYK, Markus, 74395 Mundelsheim (DE); PETSCHL, Thomas, 71638 Ludwigsburg (DE); RITTER, Steffen, 70327 Stuttgart (DE); SCHUSTER, Mathias, 75242 Neuhausen (DE); HERBST, Birgit, 71665 Vaihingen a. d. Enz (DE); KAISER, Ralf, 70469 Stuttgart (DE); KAISER, Uwe, 71672 Marbach a. N. (DE); KEGEL, Joachim, 70806 Kornwestheim (DE); WÄCHTER, Hans-Günter, 71691 Freiberg (DE)
(86) Internationale Anmeldenummer: PCT/EP2007/062980
(87) Internationale Veröffentlichungsnummer: WO 2008/068182

(56) Entgegenhaltungen:
- EP-A- 0 269 895
- EP-A- 0 771 582
- EP-A- 1 214 903
- EP-A- 1 428 566
- WO-A-97/15370
- US-A- 4 547 950
- US-A- 5 211 846
- US-A- 5 548 893
- US-A- 5 860 796
- US-A1- 2002 158 006

## Beschreibung

Die Erfindung betrifft einen auswechselbaren Filtereinsatz für einen Filter mit den Merkmalen nach dem Oberbegriff des Anspruchs 1.

### Stand der Technik

In Kraftfahrzeugen und Industriemotoren werden verschiedene Filter eingesetzt, bei denen der Filtereinsatz getrennt vom Filtergehäuse ausgebildet ist. Beispielsweise der Ölfilter weist ein entlang einer Trennfläche teilbares Filtergehäuse auf, wobei zwei Gehäuseteile des Filtergehäuses entlang der Trennfläche mittels einer Dichtung gegeneinander abgedichtet sind. Eines der beiden Gehäuseteile ist als Deckelteil ausgebildet und wird zum Auswechseln des Filtereinsatzes gelöst. Beim Auswechseln des Filtereinsatzes in den vorgeschriebenen Wartungsintervallen ist auch die Dichtung der beiden Gehäuseteile auszuwechseln.

Im praktischen Betrieb ist zu beobachten, dass das Auswechseln der Gehäusedichtung vernachlässigt wird. Es kommt vor, dass die alte Dichtung nach dem Auswechseln des Filtereinsatzes erneut verwendet wird, was zu Undichtigkeiten am Filtergehäuse führen kann. Häufig wird auch eine falsche Dichtung eingesetzt oder die Dichtung sogar vollständig vergessen. In der Folge tritt Ölverlust ein. Folgeschäden, insbesondere Motorschäden sind nicht auszuschließen.

Die Möglichkeiten einer fehlerhaften Wartung im Bereich des Ölfilters werden noch dadurch erweitert, dass falsche, nur unzureichend passende oder den Qualitätsanforderungen nicht genügende Filtereinsätze Verwendung finden können. Diese mindern das Filtrierergebnis und können zu vorzeitigem Motorverschleiß oder sogar zu ernsthaften Motorschäden führen.

Der Erfindung liegt die Aufgabe zugrunde, einen auswechselbaren Filtereinsatz mit verbesserter Wartungssicherheit anzugeben.

Diese Aufgabe wird durch einen Filtereinsatz mit den Merkmalen des Anspruchs 1 gelöst.

### Offenbarung der Erfindung

Es wird ein auswechselbarer Filtereinsatz vorgeschlagen, an dem die Dichtung in der Axialrichtung verschiebbar und unverlierbar gehalten ist. Insbesondere umfasst die Dichtung einen um den Filtereinsatz umlaufenden Tragring mit einem Dichtring, wobei der umlaufende Tragring bezogen auf eine Radialrichtung innenseitig mit mindestens einer Sicherungskante versehen ist, und wobei der Filtereinsatz an seinen beiden in der Axialrichtung gelegenen Enden je einen insbesondere als Endscheibe ausgebildeten Endanschlag für die Sicherungskante aufweist. Die unverlierbare Halterung der Dichtung am Filtereinsatz führt dazu, dass bei der Entnahme des Filtereinsatzes aus dem Filtergehäuse die Dichtung für die beiden Gehäuseteile gleich mit entnommen wird und nicht wieder verwandt werden kann. Der neu einzusetzende, gleichartige Filtereinsatz trägt die unverlierbar gehaltene Dichtung, die beim Einsetzen des neuen Filtereinsatzes in Position gebracht wird. Die neue Dichtung kann nicht vergessen werden. Die axiale Verschiebbarkeit der Dichtung lässt zu, dass zunächst der Filtereinsatz positioniert wird, ohne dass die Dichtung dabei stört. Unabhängig von der Lage des Filtereinsatzes kann die Dichtung in ihre vorgesehene Montageposition gebracht werden. Insbesondere ergibt sich die Möglichkeit, den gleichen Filtereinsatz in unterschiedliche Filtergehäuse mit unterschiedlich positionierten Trennebenen einzusetzen. Durch axiales Verschieben kann die Dichtung in verschiedene Montagepositionen gebracht werden. Bei einer vorteilhaften Weiterbildung des Filtereinsatzes in spiegelsymmetrischer Ausführung kommt es auf die Einbaurichtung des Filtereinsatzes nicht an. Zur Vereinfachung der Handhabung kann der Benutzer den Filtereinsatz in beliebiger Richtung in das Gehäuse einführen, wobei die Dichtung in die geeignete Axialposition verschoben wird.

In einer bevorzugten Ausführung umfasst der Filtereinsatz einen Filterkörper insbesondere aus Filterpapier mit in der Axialrichtung verlaufenden Falten. Der Tragring der Dichtung weist dabei radial innere Zähne zur Bildung der Sicherungskanten auf, wobei die Zähne zwischen die Falten greifen. Die Endscheiben des Filtereinsatzes müssen dabei keinen größeren Durchmesser als der eigentliche Filterkörper aufweisen, da die durch sie gebildeten Endanschläge für die Zähne des Tragrings in den durch die Falten gebildeten Vertiefungen liegen. Die Anordnung ist leicht montierbar und kompakt. Die Zähne gleiten in Axialrichtung ungehindert an den Falten entlang, bilden jedoch erforderlichenfalls eine Verdrehsicherung für die Dichtung.

In bevorzugter Weiterbildung ist die Anzahl der Falten und der Zähne gleich. Es kann auch zweckmäßig sein, dass die Anzahl der Falten ein ganzzahliges Vielfaches der Anzahl der Zähne ist. Beim axialen Aufschieben des Tragrings finden die gleichmäßig über den Umfang verteilten Zähne jeweils eine geeignete axiale Vertiefung zwischen zwei radial nach außen stehenden, ebenfalls gleichmäßig über den Umfang verteilten Falten vor, ohne dass der Filterkörper verformt werden muss. Neben einer leichten Montierbarkeit ist auch eine freie axiale Verschiebbarkeit sichergestellt.

In einer zweckmäßigen Alternative weist die Endscheibe zur Bildung des Endanschlages mindestens eine in der Radialrichtung hervorstehende Nase auf, die die insbesondere als kreisförmige Innenkante ausgebildete Sicherungskante des Tragringes in der Radialrichtung übergreift. Die Anordnung ist insbesondere beispielsweise bei gewickelten Filtern ohne axial verlaufende Falten einsetzbar, kann aber auch bei Filterkörpern mit Falten eingesetzt werden. Eine geometrische Überschneidung des Tragringes mit dem Filterkörper ist nicht erforderlich, da die Sicherungsfunktion der Endanschläge durch die eine oder mehrere radial hervorstehenden Nasen übernommen wird. Filterkörper und Tragring können frei gestaltet werden.

In zweckmäßiger Weiterbildung ist der umlaufende Tragring mit strömungsdurchlässigen Öffnungen versehen. Unabhängig von der axialen Verschiebeposition der Dichtung ist eine ungehinderte axiale Ausbreitung des zu filtrierenden Mediums sichergestellt.

Der umlaufende, insbesondere ebene Tragring ist vorteilhaft zumindest in der Radialrichtung im Wesentlichen starr ausgebildet. Hierdurch ist er in der Lage, in der Radialrichtung eine Stützwirkung auf den Dichtring auszuüben, wodurch der Dichtring in Radialrichtung gegen zumindest eines der Gehäuseteile angedrückt wird. Die Dichtwirkung ist erhöht.

### Kurze Beschreibung der Zeichnungen

Ausführungsbeispiele der Erfindung sind im Folgenden anhand der Zeichnung näher beschrieben. Es zeigen:

Fig. 1 eine schematische Längsschnittdarstellung eines Filters mit einem eingesetzten, erfindungsgemäß ausgeführten Filtereinsatz, an dem eine Dichtung für das Filtergehäuse axial verschiebbar und unverlierbar gehalten ist;

Fig. 2 eine perspektivische Ansicht der als separates Einzelteil ausgeführten Dichtung nach Fig. 1 mit Einzelheiten ihres Tragrings und ihrer als Zähne ausgebildeten Sicherungskanten;

Fig. 3 eine perspektivische Ansicht des auswechselbaren Filtereinsatzes nach Fig. 1 mit Einzelheiten seines gefalteten Filterkörpers und der zwischen den Falten axial geführten Dichtung nach Fig. 2;

Fig. 4 eine schematische Stirnansicht eines weiteren Ausführungsbeispiels mit radial hervorstehenden Nasen der Endscheibe zur Bildung von Längsanschlägen,

Fig. 4a zeigt eine Alternative eines Filtereinsatzes mit einer Gehäusedichtung,

Fig. 4b zeigt eine Detaildarstellung des in Figur 4a gezeigten Dichtungsträgers.

### Ausführungsform der Erfindung

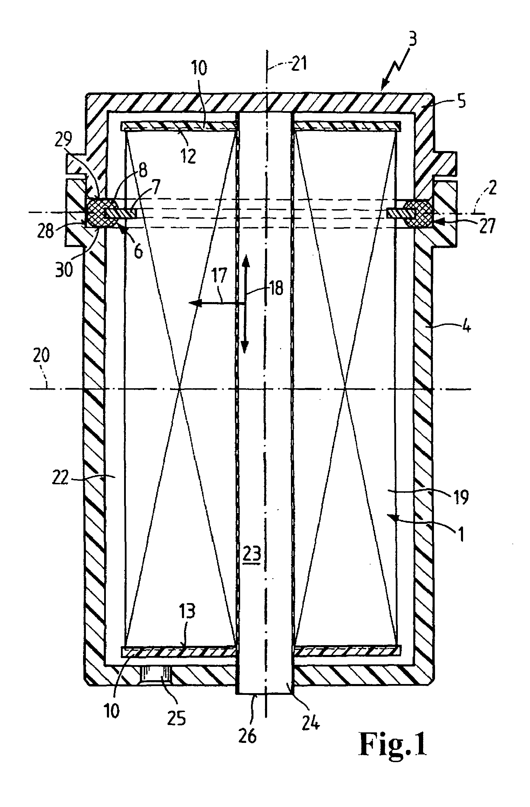

Fig. 1 zeigt in einer schematischen Längsschnittdarstellung einen Filter für Kraftfahrzeuge oder Industriemotoren. Im gezeichneten Ausführungsbeispiel ist ein Ölfilter für den Schmierölkreislauf eines Kraftfahrzeugmotors vorgesehen. Es kann auch ein anderer Ölfilter beispielsweise für einen Hydraulikölkreislauf sowie ein Kraftstoff-, Wasser-, Kühlmittel- oder Luftfilter von Kraftfahrzeugen oder Industriemotoren zweckmäßig sein.

Der Filter umfasst ein zu einer Mittelachse 21 im Wesentlichen rotationssymmetrisches Filtergehäuse 3 sowie einen im Filtergehäuse 3 gehaltenen, auswechselbaren Filtereinsatz 1. Zur Entnahme bzw. zum Einsetzen des auswechselbaren Filtereinsatzes 1 ist das Filtergehäuse 3 entlang einer quer bzw. senkrecht zur Mittelachse 21 liegenden Trennfläche 2 teilbar. Hierzu weist das Filtergehäuse 3 ein unteres Gehäuseteil 4 auf, welches fest mit dem Verbrennungsmotor bzw. dessen Ölkreislauf verbunden ist. Ein weiteres Gehäuseteil 5 des Filtergehäuses 3 bildet einen Deckel, der den Innenraum des unteren Gehäuseteils 4 verschließt, und der lösbar im Bereich der Trennfläche 2 mit dem unteren Gehäuseteil 4 verbunden ist.

Der Filtereinsatz 1 erstreckt sich in einer parallel zur Mittelachse 21 verlaufenden Axialrichtung 18 und ist im Wesentlichen zylindrisch ausgeführt. Im montierten Zustand liegt der Filtereinsatz 1 achsparallel zu dem ebenfalls im Wesentlichen zylindrischen Filtergehäuse 3 in dessen geschlossenen Innenraum. Achsparallel zur Mittelachse 21 ist ein schematisch angedeutetes, gitterartiges Mittelrohr 24 vorgesehen, welches den Filtereinsatz 1 zentriert und abstützt.

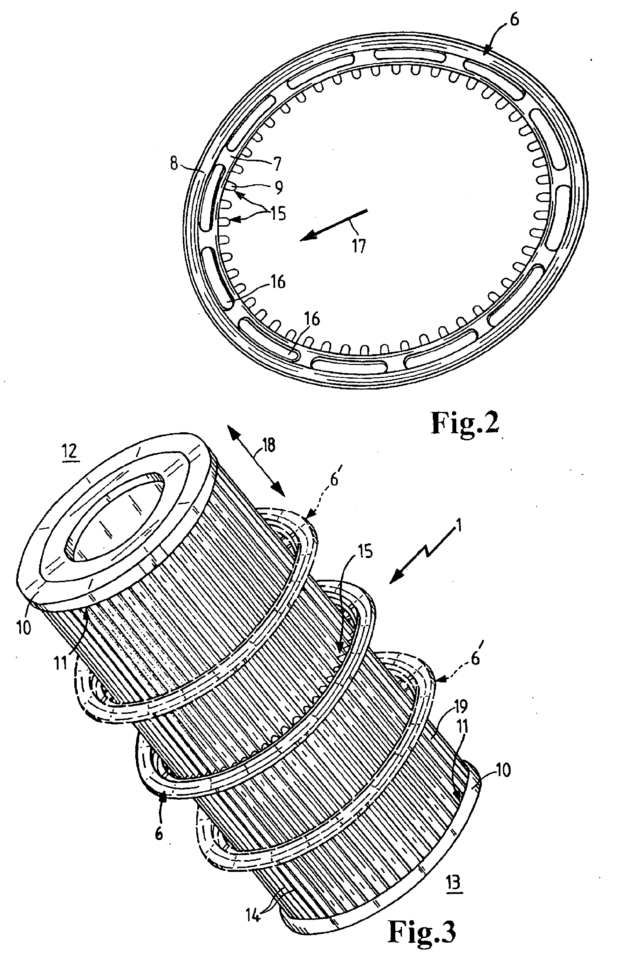

Der Filtereinsatz 1 weist einen im Wesentlichen zylindrischen, in Fig. 3 näher dargestellten Filterkörper 19 aus Filterpapier auf, an dessen beiden in der Axialrichtung 18 liegenden Enden 12, 13 je eine Endscheibe 10 strömungsdicht befestigt ist. Zwischen den beiden Endscheiben 10 ist der Filterkörper 19 von einer ringförmigen Dichtung 6 umgriffen. Die Dichtung 6 umfasst einen um den Filtereinsatz 1 umlaufenden Tragring 7 mit einem bezogen auf eine radiale Richtung 17 außenseitig angeordneten, ebenfalls umlaufenden Dichtring 8. Der elastische Dichtring 8 liegt in einer Nut 27 des Gehäuses 3, die in der Trennfläche 2 umläuft. Im montierten Zustand der beiden Gehäuseteile 4, 5 ist die umlaufende Nut 27 durch eine Umfangswand 28 und eine Stirnfläche 30 des unteren Gehäuseteils 4 sowie durch eine weitere Stirnfläche 29 des oberen Gehäuseteils 5 gebildet. In Folge einer axialen Verspannung der beiden Gehäuseteile 4, 5 gegeneinander liegt der elastische Dichtring 8 dichtend eingeklemmt an den beiden Stirnflächen 29, 30 an. Darüber hinaus drückt der Tragring 7 den Dichtring 8 in der Radialrichtung 17 gegen die Umfangswand 28, wodurch auch in der Radialrichtung 28 eine dichtende Anlage sichergestellt ist. Aus der Kombination von axialer und radialer Anpressung des Dichtringes 8 ergibt sich eine wirkungsvolle Abdichtung der beiden Gehäuseteile 4,5 innerhalb der Trennfläche 2 gegeneinander. Es kann auch zweckmäßig sein, ein dichtendes Andrücken allein in der Radialrichtung 17 oder der Axialrichtung 18 vorzusehen.

Der Innenraum des Filtergehäuses 3 ist durch den Filtereinsatz 1 in einen radial äußeren, ringförmigen Raum zur Bildung einer Rohseite 22 sowie in einen radial inneren, etwa zylindrischen Raum zur Bildung einer Reinseite 23 aufgeteilt. Das Gehäuseteil 4 weist mindestens eine schematisch angedeutete Öffnung 25 auf, durch die das zu filtrierende Medium - hier Öl - in die Rohseite 22 einströmt. Von dort strömt das zu filtrierende Medium entgegen der Radialrichtung 17 durch den Filterkörper 19 hindurch, wobei die beiden axialen Endscheiben 10 ein axiales Ausströmen verhindern. Das nach dem Durchtritt durch den Filterkörper 19 filtrierte und in die Reinseite 23 eingeströmte Medium tritt im gereinigten Zustand durch eine mittige, Öffnung 26 aus dem Filtergehäuse 3 aus.

Die den Tragring 7 und den Dichtring 8 umfassende Dichtung 6 der beiden Gehäuseteile 4, 5 ist am Filtereinsatz 1 in weiter unten näher beschriebenen Weise bezogen auf die Axialrichtung 18 verschiebbar und unverlierbar am Filtereinsatz 1 gehalten. Sofern bei Wartungsarbeiten ein Auswechseln des Filtereinsatzes 1 erforderlich wird, erfolgt eine Trennung des als Deckel wirkenden Gehäuseteils 5 vom Gehäuseteil 4, wonach der Filtereinsatz 1 aus dem Gehäuse 3 bzw. aus dem am Motor verbleibenden Gehäuseteil 4 entnommen werden kann. Infolge der unverlierbaren Halterung der Dichtung 6 am Filtereinsatz 1 wird diese gemeinsam mit dem Filtereinsatz 1 entnommen und entsorgt. Eine Wiederverwendung der gebrauchten Dichtung 6 ist vermieden. Ein neuer, gleichartiger Filtereinsatz 1 kann anschließend in das untere Gehäuseteil 4 eingesetzt werden, wobei gleichzeitig die unverlierbar daran gehaltene neue Dichtung 6 zumindest grob in ihre vorgesehene Einbaulage in der Axialrichtung 18 verschoben wird. Die axiale Verschiebbarkeit der Dichtung 6 gegenüber dem Filtereinsatz 1 lässt eine Feinpositionierung der Dichtung 6 gegenüber der Nut 27 unabhängig von einer Bewegung des Filtereinsatzes 1 zu. Die unverlierbare Halterung am Filtereinsatz 1 stellt sicher, dass die Dichtung 6 bei der abschließenden Montage des Filtergehäuses 3 bzw. bei der Verbindung der beiden Gehäuseteile 4, 5 miteinander nicht vergessen wird. Der Filterkörper 19 ist zudem gemeinsam mit seinen beiden Endscheiben 10 bezogen auf eine senkrecht zur Axialrichtung 18 liegende Mittelebene 20 spiegelsymmetrisch ausgebildet. Dies ermöglicht es, den insgesamt spiegelsymmetrisch ausgebildeten Filtereinsatz 1 beliebig mit einem seiner beiden Enden 12, 13 zuerst in das Gehäuseteil 5 einzuführen, wobei dann die Dichtung 6 frei in der Axialrichtung 18 bis zu ihrer Montageposition in der Trennfläche 2 verschoben werden kann.

Die den Tragring 7 und den Dichtring 8 umfassende Dichtung 6 nach Fig. 1 ist in perspektivischer Ansicht in Fig. 2 gezeigt. Der Tragring 7 ist im Wesentlichen eben ausgebildet und aus einem im Vergleich zum gummiartig elastischen Dichtring 8 starren Kunststoff gefertigt. In Verbindung mit der ebenen Ausführung ist der Tragring 7 zumindest in der Radialrichtung 17 im wesentlichen insoweit starr, dass er eine in der Radialrichtung 17 wirkende, im Zusammenhang mit Fig. 1 beschriebene Anpresskraft auf den Dichtring 8 gegen die Umfangswand 28 ausüben kann. Der Tragring 7 weist über den Umfang verteilt angeordnete, als Langlöcher ausgebildete Öffnungen 16 auf, die eine axiale, durch den Tragring 7 ungestörte Durchströmung der Rohseite 22 (Fig. 1) im Filtergehäuse 3 zulassen.

Der gummielastische Dichtring 8 umschließt mit einem etwa U-förmigen Querschnitt umlaufend eine radial äußere Kante des Tragringes 7. Hierdurch ist eine formschlüssige Befestigung des Dichtringes 8 am Tragring 7 gegeben. Zusätzlich oder alternativ kann der Dichtring 8 auch auf den Tragring 7 aufgeklebt, aufgespritzt, aufvulkanisiert oder in anderer Weise befestigend aufgebracht sein.

Der umlaufende Tragring 7 ist bezogen auf die Radialrichtung 17 innenseitig mit mindestens einer Sicherungskante 9 versehen. Der in Fig. 3 dargestellte Filtereinsatz 1 weist an seinen beiden in der Axialrichtung 18 gelegenen Enden 12, 13 je mindestens einen Endanschlag 11 für die mindestens eine Sicherungskante 9 (Fig. 2) auf. Hierdurch kann die Dichtung 6 nach Fig. 2 zwar in der Axialrichtung 18 auf dem Filterkörper 19 verschoben werden, nicht jedoch von dem Filterkörper 19 abgezogen werden.

Im Ausführungsbeispiel nach Fig. 2 weist der Tragring 7 entgegen der Radialrichtung 17 nach innen hervorstehende Zähne 15 auf, die gleichmäßig über den Umfang verteilt sind. Durch die Zähne 15 ist eine entsprechende Anzahl von Sicherungskanten 9 gebildet. Unter gleichzeitigem Bezug auf die Fig. 2 und 3 wird das Zusammenspiel der als Sicherungskanten 9 wirkenden Zähne 15 mit den entsprechenden Endanschlägen 11 deutlich: Das Filterpapier des Filtereinsatzes 1 ist derart gefaltet und zu dem Filterkörper 19 zylindrisch geformt, dass eine Anzahl von Falten 14 in der axialen Richtung 18 verläuft. Im montierten Zustand der Dichtung 6 greifen die Zähne 15 zwischen die axial verlaufenden Falten 14, so dass die in Fig. 3 dargestellte Dichtung 6 aus ihrer beispielhaft mittleren Position in der Axialrichtung 18 in beliebige, mit 6' bezeichnete, gestrichelt dargestellte Axialpositionen verschoben werden kann. Die beiden an den axialen Enden 12, 13 am Filterkörper 19 befestigten Endscheiben 10 weisen einen Außendurchmesser auf, der im Wesentlichen dem Außendurchmesser des gefalteten Filterkörpers 19 entspricht. In den durch die Falten 14 gebildeten, in der Axialrichtung 18 verlaufenden Vertiefungen mit verringertem Durchmesser bilden die Endscheiben 10 dabei Endanschläge 11 für die als Sicherungskanten 9 wirkenden, zwischen die Falten 14 greifenden Zähne 15. Die Dichtung 6 kann in der Folge nicht über die Endscheiben 10 hinaus vom Filterkörper 19 abgezogen werden. Die Falten 14 und die Zähne 15 sind jeweils gleichmäßig über den Umfang verteilt angeordnet. Die Anzahl der Falten 14 und der Zähne 15 ist im gezeigten Ausführungsbeispiel so, dass zwischen jedes Paar von Falten 14 je ein Zahn 15 greift. Es kann auch eine unterschiedliche Anzahl von Falten 14 und Zähnen 15 zweckmäßig sein, wobei die Anzahl der Falten 14 vorteilhaft ein ganzzahliges Vielfaches der Anzahl der Zähne 15 beträgt.

Abweichend von der rotationssymmetrischen und insbesondere zylindrischen Form des Filtereinsatzes 1 und der Kreisringform der Dichtung 6 nach Fig. 2 kann auch eine abweichende, beispielsweise elliptische oder rechteckige Querschnittsform zweckmäßig sein. Anstelle des faltenförmig ausgebildeten Filterkörpers 19 nach Fig. 3 kann auch ein glatter, beispielsweise gewickelter Filterkörper zweckmäßig sein, wobei dann die Endanschläge 11 in der Radialrichtung 17 über die Umfangskontur des Filterkörpers 19 hervorstehen.

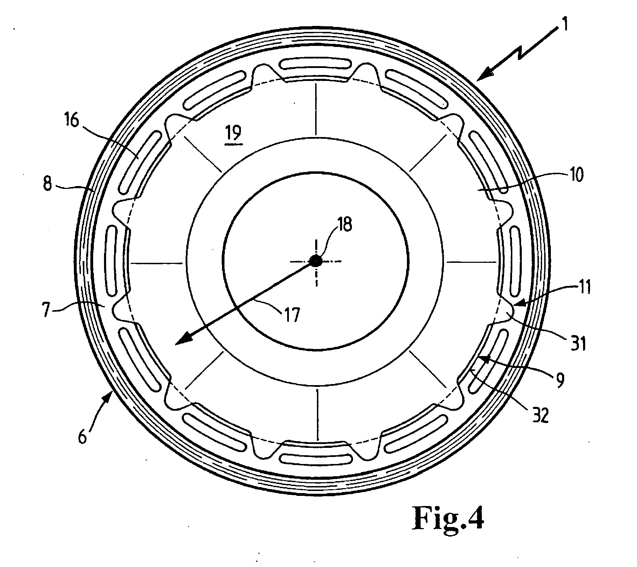

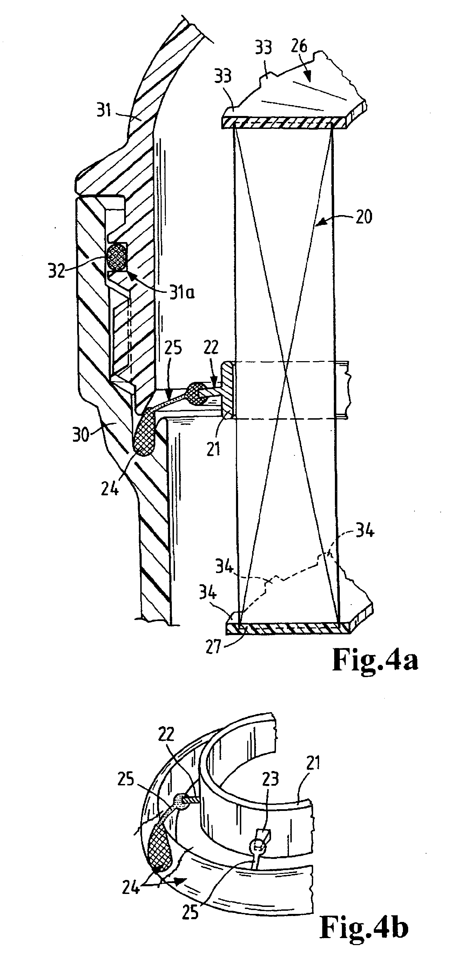

Eine derartige Ausführung ist beispielhaft in einer schematischen Stirnansicht in Fig. 4 gezeigt. Beide Endscheiben 10 sind identisch ausgeführt und weisen gleichmäßig über ihren Umfang verteilte, in der Radialrichtung 17 über die Außenkontur des nicht näher dargestellten Filterkörpers 19 hervorstehende Nasen 31 auf. Die Dichtung 6 ist vergleichbar zum Ausführungsbeispiel nach Fig. 2 mit einem Öffnungen 16 aufweisenden Tragring 7 und einem radial außenseitig umlaufenden Dichtring 8 ausgeführt. Abweichend vom Ausführungsbeispiel nach Fig. 2 weist der Tragring 7 keine radial inneren Zähne 15 (Fig. 2) auf, sondern ist bezogen auf die Radialrichtung 17 nach innen durch eine kreisförmig umlaufende Kante 32 begrenzt. Die in der Radialrichtung 17 hervorstehenden Nasen 31 der Endscheiben 10 weisen ein radial äußeres Maß auf, welches größer ist als der Innendurchmesser der kreisförmigen Innenkante 32. Hierbei ist die Sicherungskante 9 des Tragringes 7 durch die kreisförmige Innenkante 32 gebildet, die in der Radialrichtung 17 von den Nasen 31 übergriffen ist.

Die Innenkante 32 weist ein radiales Spiel gegenüber der Außenkontur des Filterkörpers 19 auf, so dass die Dichtung 6 vergleichbar zur Darstellung nach Fig. 3 in der dort angegebenen Axialrichtung 18 frei verschiebbar ist. Die als Nasen 31 ausgebildeten Endanschläge 11 halten die Dichtung 6 am Filtereinsatz 1 in der Axialrichtung 18 unverlierbar am Filtereinsatz 1 fest.

In Figur 4a ist eine Alternative eines Dichtungsträgers, in einer Ausschnittskizze dargestellt. Ein Filtereinsatz 20 ist mit zwei Endscheiben 26, 27 versehen. Die Endscheiben weisen Anschlagstege 33, 34 auf, die die axiale Beweglichkeit einer Hülse begrenzen. Die Hülse 21 greift nicht in Falten des zickzackförmig gefalteten Filtereinsatzes 20 ein, sondern kann auf den Falten verschoben werden. Sie ist mit Trägerstegen 22, 23 ausgestattet, an denen über jeweils elastische Stege 25 ein Dichtring 24 wie er auch in Figur 4b gezeigt ist, befestigt wird. Der Dichtring hat eine für die Abdichtung der Gehäuseteile 30, 31 geeignete Form. An dem Gehäuseteil 31 befindet sich eine Nut, in welcher ein Abstreifring 32 angeordnet ist, dieser hat die Aufgabe, beim Öffnen oder Verschließen der beiden Gehäuseteile ein Auslaufen von Flüssigkeit aus dem Gehäuse zu verhindern. Der Abstreifring übernimmt keine Dichtfunktion und ist daher keinem Verschleiß unterworfen.

Der Vorteil dieses Aufbaus liegt darin, dass durch die Trägerstege 22, 23 lediglich relativ kurze elastische Stege 25 erforderlich sind, so dass eine Dichtungsführung gewährleistet ist.

## Patentansprüche

1. Filtereinsatz (1), vorgesehen als auswechselbarer Einsatz in einem Filter, insbesondere in einem Ölfilter, Kraftstofffilter oder dgl. eines Verbrennungsmotors, wobei der Filter ein entlang einer Trennfläche (2) teilbares Filtergehäuse (3) und den auswechselbaren, in einer Axialrichtung (18) sich erstreckenden Filtereinsatz (1) umfasst, und wobei zwei Gehäuseteile (4, 5) des Filtergehäuses (3) entlang der Trennfläche (2) mittels einer Dichtung (6) gegeneinander abgedichtet sind, **dadurch gekennzeichnet, dass** die Dichtung (6) am Filtereinsatz (1) in der Axialrichtung (18) verschiebbar und unverlierbar gehalten ist.

2. Filtereinsatz nach Anspruch 1, **dadurch gekennzeichnet, dass** die Dichtung (6) einen um den Filtereinsatz (1) umlaufenden Tragring (7) mit einem Dichtring (8) umfasst, wobei der umlaufende Tragring (7) bezogen auf eine Radialrichtung (17) innenseitig mit mindestens einer Sicherungskante (9) versehen ist, und wobei der Filtereinsatz (1) an seinen beiden in der Axialrichtung (18) gelegenen Enden (12, 13) je einen insbesondere als Endscheibe (10) ausgebildeten Endanschlag (11) für die Sicherungskante (9) aufweist.

3. Filtereinsatz nach Anspruch 2, **dadurch gekennzeichnet, dass** der Filtereinsatz (1) einen Filterkörper (19) insbesondere aus Filterpapier mit in der Axialrichtung (18) verlaufenden Falten (14) umfasst, und dass der Tragring (7) der Dichtung (6) radial innere Zähne (15) zur Bildung der Sicherungskanten (9) aufweist, wobei die Zähne (15) zwischen die Falten (14) greifen.

4. Filtereinsatz nach Anspruch 3, **dadurch gekennzeichnet, dass** die Anzahl der Falten (14) und der Zähne (15) gleich ist.

5. Filtereinsatz nach Anspruch 2, **dadurch gekennzeichnet, dass** die Endscheibe (10) zur Bildung des Endanschlages (11) mindestens eine in der Radialrichtung (17) hervorstehende Nase (31) aufweist, die die insbesondere als kreisförmige Innenkante (32) ausgebildete Sicherungskante (9) des Tragringes (7) in der Radialrichtung (17) übergreift.

6. Filtereinsatz nach einem der Ansprüche 2 bis 5, **dadurch gekennzeichnet, dass** der umlaufende Tragring (7) mit strömungsdurchlässigen Öffnungen (16) versehen ist.

7. Filtereinsatz nach Anspruch 1, **dadurch gekennzeichnet, dass** an dem Filtereinsatz (20) eine axial verschiebbare Hülse (21) versehen ist und diese Hülse wenigstens zwei Trägerstege (22, 23) aufweist, an welchen die Dichtung (24) befestigt ist.

8. Filtereinsatz nach Anspruch 7, **dadurch gekennzeichnet, dass** die Dichtung (24) über einen elastischen Steg (25) jeweils mit dem Trägersteg (22, 23) verbunden ist.

9. Filtereinsatz nach Anspruch 7, **dadurch gekennzeichnet, dass** an den Endscheiben (26, 27) Anschlagstege (33, 34) als Verliersicherung für die Hülse (21) vorgesehen sind.

10. Filtereinsatz nach Anspruch 7, **dadurch gekennzeichnet, dass** die beiden Gehäuseteile (30, 31) über die Dichtung (24) abgedichtet sind und weiterhin ein Abstreifring (32) sich zwischen den beiden Gehäuseteilen (30, 31) befindet.

11. Filtereinsatz nach einem der Ansprüche 2 bis 6, **dadurch gekennzeichnet, dass** der umlaufende, insbesondere ebene Tragring (7) zumindest in der Radialrichtung (17) im Wesentlichen starr ist.

12. Filtereinsatz nach einem der Ansprüche 1 bis 7, **dadurch gekennzeichnet, dass** der Filterkörper (19) insbesondere zusammen mit seinen Endscheiben (10) bezogen auf eine senkrecht zur Axialrichtung (18) liegende Mittelebene (20) spiegelsymmetrisch ist.

## Claims

1. Filter insert (1), provided as exchangeable insert in a filter, in particular in an oil filter, fuel filter or the like of an internal combustion engine, the filter comprising a filter housing (3) dividable along a separation surface (2) and the exchangeable filter insert (1) extending in an axial direction (18) and two housing components (4, 5) of the filter housing (3) being sealed against each other by means of a sealing (6) along the separation surface (2), **characterized in that** the sealing (6) at the filter insert (1) is supported movably and undetachably in the axial direction (18).

2. Filter insert according to claim 1, **characterized in that** the sealing (6) comprises a supporting ring (7) with a sealing ring (9) placed circumferentially around the filter insert (1), the circumferential supporting ring (7), in relation to a radial direction (17), being provided inside with at least one securing edge (9), and the filter insert (1) featuring at both of its ends (12, 13) in axial direction (18) an end stop (11) each designed in particular as end plate (10) for the securing edge (9).

3. Filter insert according to claim 2, **characterized in that** the filter insert (1) comprises a filter body (19) made in particular of filter paper with pleats (14) running in axial direction (18), and that the supporting ring (7) of the sealing (6) features radial inner teeth (15) for forming the securing edges (9), the teeth (15) engaging between the pleats (14).

4. Filter insert according to claim 3, **characterized in that** the number of pleats (14) and of the teeth (15) is the same.

5. Filter insert according to claim 2, **characterized in that** the end plate (10) for forming the end stop (11) features at least one projection (31) protruding in radial direction (17) which overlaps the security edge (9) designed in particular as circular inner edge (32) of the supporting ring (7) in radial direction (17).

6. Filter insert according to one of the claims 2 to 5, **characterized in that** the circumferential supporting ring (7) is provided with flow-permeable apertures (16).

7. Filter insert according to claim 1, **characterized in that** an axially movable bushing (21) is provided at the filter insert (20) and that this bushing features at least two supporting bars (22, 23) to which the sealing (24) is attached.

8. Filter insert according to claim 7, **characterized in that** the sealing (24) is connected with a supporting bar (22, 23) each via an elastic bar (25).

9. Filter insert according to claim 7, **characterized in that** stop bars (33, 34) are provided as anti-loss device for the bushing (21) at the end plates (26, 27).

10. Filter insert according to claim 7, **characterized in that** the two housing components (30, 31) are sealed by the sealing (24) and that furthermore a wiper ring (32) is provided between the two housing components (30, 31).

11. Filter insert according to one of the claims 2 to 6, **characterized in that** the circumferential, in particular plane supporting ring (7) is basically rigid at least in radial direction (17).

12. Filter insert according to one of the claims 1 to 7, **characterized in that** the filter body (19), in particular together with its end plates (10), is mirror-symmetrical in relation to a center plane (20) disposed perpendicular to the axial direction (18).

## Revendications

1. Insert de filtre (1), prévu comme insert échangeable dans un filtre, notamment dans un filtre à huile, filtre à carburant ou filtre analogue d'un moteur à combustion interne, le filtre comprenant un boîtier de filtre (3) divisible le long d'une surface de séparation (2) et l'insert de filtre (1) échangeable s'étendant dans un sens axial (18), et deux parties de boîtier (4, 5) du boîtier de filtre (3) étant étanchées l'une par rapport à l'autre le long de la surface de séparation (2) au moyen d'un joint d'étanchéité (6), **caractérisé en ce que** le joint d'étanchéité (6) peut être déplacé sur l'insert de filtre (1) en sens axial (18) et est maintenu de sorte à ne pas pouvoir être perdu.

2. Insert de filtre selon la revendication 1, **caractérisé en ce que** le joint d'étanchéité (6) comprend une bague porteuse (7) encerclant l'insert de filtre (1) et dotée d'une bague d'étanchéité, la bague porteuse circulaire (7) étant pourvue à l'intérieur, considéré dans un sens radial (17), d'au moins une arête de sécurité (9), et l'insert de filtre (1) présentant au niveau de ses deux extrémités (12, 13) situées en sens axial (18) respectivement une butée d'extrémité (11) réalisée notamment en tant que plaque d'extrémité (10) pour l'arête de sécurité (9).

3. Insert de filtre selon la revendication 2, **caractérisé en ce que** l'insert de filtre (1) comprend un corps de filtre (19) notamment en papier filtre avec des plis (14) s'étendant en sens axial (18), et **en ce que** la bague porteuse (7) du joint d'étanchéité (6) présente en sens radial des dents intérieures (15) afin de former les arêtes de sécurité (9), les dents (15) étant en prise entre les plis (14).

4. Insert de filtre selon la revendication 3, **caractérisé en ce que** le nombre de plis (14) est identique au nombre de dents (15).

5. Insert de filtre selon la revendication 2, **caractérisé en ce que** la plaque d'extrémité (10) présente, afin de former la butée d'extrémité (11), au moins un ergot (31) en saillie en sens radial (17) qui chevauche en sens radial (17) l'arête de sécurité (9) de la bague porteuse (7), arête qui est notamment réalisée en tant qu'arête intérieure (32) en forme de cercle.

6. Insert de filtre selon l'une des revendications 2 à 5, **caractérisé en ce que** la bague porteuse circulaire (7) est pourvue d'orifices (16) faisant passer le flux.

7. Insert de filtre selon la revendication 1, **caractérisé en ce qu'**une douille (21) mobile en sens axial soit prévue au niveau de l'insert de filtre (20) et **en ce que** cette douille présente au moins deux nervures porteuses (22, 23) auxquelles est fixé le joint d'étanchéité (24).

8. Insert de filtre selon la revendication 7, **caractérisé en ce que** le joint d'étanchéité (24) est relié respectivement à la nervure porteuse (22, 23) par l'intermédiaire d'une nervure élastique (25).

9. Insert de filtre selon la revendication 7, **caractérisé en ce que** des nervures de butée (33, 34) évitant que la douille ne soit perdue sont prévues au niveau des plaques d'extrémité (26, 27).

10. Insert de filtre selon la revendication 7, **caractérisé en ce que** les deux parties du boîtier (30, 31) sont étanchées par le joint d'étanchéité (24) et que, de plus, une bague racleuse (32) se trouve entre les deux parties du boîtier (30, 31).

11. Insert de filtre selon l'une des revendications 2 à 6, **caractérisé en ce que** la bague porteuse circulaire, notamment plane, est essentiellement rigide, au moins en sens radial (17).

12. Insert de filtre selon l'une des revendications 1 à 7, **caractérisé en ce que** le corps de filtre (19), notamment avec ses plaques d'extrémité (10), est axialement symétrique à un plan médian (20) disposé verticalement au sens axial (18).
